# EUROPÄISCHE PATENTANMELDUNG

(11) **EP 4 782 276 A1**
(43) Veröffentlichungstag der Anmeldung: **29.07.2026**
(21) Anmeldenummer: 25153637.1
(22) Anmeldetag: 23.01.2025
(51) Int. Cl.: B60P 1/44, B60P 3/075, B60P 3/08

(54) **GESTELL FÜR CONTAINERBELADUNG UND VERFAHREN ZUR CONTAINERBELADUNG**

(71) Anmelder: Kralik Ritter von Meyrswalden, Markus, 22399 Hamburg (DE)
(72) Erfinder: Kralik Ritter von Meyrswalden, Markus, 22399 Hamburg (DE); Kellner, Ole, 22147 Hamburg (DE)
(74) Vertreter: Jostarndt Patentanwalts-AG

(57) **Zusammenfassung**

Die Erfindung betrifft einen Container (1) mit einer Vorrichtung (2) zur Beladung des Containers (1), insbesondere eines Standard-Containers, mit wenigstens einem Fahrzeug (3), wobei die Vorrichtung (2) eine an einer Containerdecke verfahrbare Katze (6K) aufweist, die zum Transport von Trägern (4) in und aus dem Container (1) geeignet ist.

## Beschreibung

Die Erfindung betrifft ein Gestell für Containerbeladung, welches einen aus dem Container ausfahrbaren Teil und eine verfahrbare Katze, beispielsweise ein Rollfahrwerk aufweist. Die Katze ist dazu geeignet, Fahrzeuge, insbesondere Autos mittels eines Tragegestells und Einsteckpositionen in den Containerwänden räumlich je nach Abmessungen der Fahrzeuge flexibel zu fixieren.

Bisherige Ansätze zum Transport von Autos in (Standard-)Containern setzen auf ausklappbare oder faltbare Gestelle auf dem Boden der Container, wie beispielsweise in CN108341172A oder EP1676792A1 gezeigt.

Aufgabe der Erfindung ist es, ein alternatives Gestell vorzuschlagen, bei dem der Boden frei bleibt und der Beladevorgang besonders komfortabel vonstattengehen kann. Darüber hinaus ist es möglich das eingebaute Tragegestell für die Autos so in der Decke des Containers zu positionieren, dass dieser alternativ, insbesondere, wenn der Container nicht mit einem oder mehreren Fahrzeugen beladen ist, wie ein Standard-Container beladen werden kann.

Erfindungsgemäß wird diese Aufgabe durch einen Container mit den Merkmalen des unabhängigen Anspruches 1 gelöst. Vorteilhafte Weiterbildungen des Containers ergeben sich aus den Unteransprüchen 2 - 9. Die Aufgabe wird ferner durch ein Verfahren nach Anspruch 10 gelöst. Vorteilhafte Weiterbildungen des Verfahrens ergeben sich aus dem Unteranspruch 11. Ferner wird die Aufgabe durch ein System nach Anspruch 12 gelöst.

Gemäß einem ersten Aspekt der Erfindung wird ein Container mit einer Vorrichtung zur Beladung des Containers mit Fahrzeugen bereitgestellt, wobei die Vorrichtung wenigstens einen Träger und wenigstens zwei einander gegenüberliegende an Containerwänden befindliche Abschnitte einer Tragestruktur aufweist, wobei die Vorrichtung ferner eine an einer Containerdecke befindliche Hebevorrichtung mit einer Katze aufweist, wobei die Katze zwischen einer Position außerhalb des Containers und einer Position innerhalb des Containers verfahrbar ist und dazu eingerichtet ist, Träger mit darauf befindlichen Fahrzeugen von außerhalb des Containers in den Container zu heben. Somit bleibt der Containerboden frei und kann beispielsweise genutzt werden, um weitere Güter neben den zu transportierenden Fahrzeugen aufzunehmen. Es ist weiter vorteilhaft, wenn die Maße des Containers den Maßen von Standard-Containern, beispielsweise einem 30 Fuß-Container, einem 40 Fuß-Container oder einem 45 Fuß-High-Cube-Container entsprechen. Dies ermöglicht eine Bearbeitung und einen Transport des erfindungsgemäßen Containers zusammen mit herkömmlichen Standard-Containern. Der Container und/oder die Vorrichtung können zudem Mittel zur Erhöhung der Sicherheit aufweisen, beispielsweise eine Löschdecke, Kameras, einen Feuerlöscher oder einen Tracker.

Es ist ein besonderer Vorteil der Erfindung, insbesondere von Ausführungsformen, bei denen der Containerboden frei bleibt, dass der Container, wenn er nicht mit einem oder mehreren Fahrzeugen beladen ist zu einem Transport anderer Güter genutzt, insbesondere mit Standardpaletten beladen werden kann.

Gemäß einer Ausführungsform des Containers weist die Vorrichtung weiter eine Steuereinheit auf, die elektrische und/oder sensorische Einheiten zur Sicherung der Beladung und/oder Entladung wie auch zu einer Überwachung von Komponenten, insbesondere als Signale zur Steuerung der Katze erzeugt.

In einer weiteren Ausführungsform weist die Tragestruktur eine Vielzahl von Fixierungspositionen auf und die Träger weisen seitlich ausfahrbare Fixierungsmittel auf. Bei den Fixierungspositionen kann es sich beispielsweise um in die Tragestruktur eingearbeitete Fixierungslöcher handeln, in die die Fixierungsmittel eingesteckt werden können. Dabei kann eine in die Träger integrierte Sensorik, die vorzugsweise in Kommunikation mit der Steuereinheit steht, bei der Erfassung von Fixierungspositionen, insbesondere bei der Erfassung der Fixierungslöcher, mitwirken.

Gemäß einer weiteren Ausführungsform ist die Vorrichtung mit einer Recheneinheit verbindbar, wobei die Recheneinheit einen Beladeplan für die Fixierungsmittel der Träger optimale Fixierungspositionen oder Fixierungslöcher ermitteln kann, wobei die Ermittlung folgende Merkmale berücksichtigt:
- Fahrzeugmodell, insbesondere Fahrzeuggröße und -dimension,
- Containergröße,
- Größe und Dimension weiterer mit dem Container zu transportierender Güter.

Dabei ist es möglich, dass die Recheneinheit lokal am Container angebracht ist. Alternativ kann der Container oder die Vorrichtung über ein Mittel zur Herstellung eines Kommunikationskanals mit einer Recheneinheit verfügen, die die ermittelten Fixierungspositionen über den Kommunikationskanal sendet.

Bei einer weiteren Ausführungsform sind die Träger in einer Spurweite und/oder einem Achsstand und/oder einer Radgröße verstellbar. Mit dieser Maßnahme ist die Anzahl der im Container fixierbaren Fahrzeugmodelle besonders hoch.

Gemäß einer weiteren Ausführungsform deckt der Abschnitt der Tragestruktur jeweils die Containerwand in Gänze ab. Alternativ oder ergänzend erfüllt die Tragestruktur zusätzlich eine die Containerwand unterstützende Funktion.

In einer weiteren Ausführungsform weist die Vorrichtung ein graphisches Nutzerinterface auf, mit dem ein/der Beladeplan verändert oder erstellt werden kann und/oder dass mit einem mit der Recheneinheit der Vorrichtung in Verbindung stehenden Endgerät ein/der Beladeplan verändert oder erstellt werden kann.

Gemäß einer weiteren Ausführungsform ist die Hebevorrichtung teleskopartig aus dem Container ausfahrbar. Diese Ausführungsform zeichnet sich durch eine besondere Platzersparnis im eingefahrenen Zustand aus.

Gemäß einem weiteren Aspekt der Erfindung wird ein Verfahren zur Beladung eines Containers nach einem der vorigen Ansprüche mit Fahrzeugen bereitgestellt, das die folgenden Schritte umfasst:
- Befestigen eines Fahrzeugs auf einem Träger,
- Bereitstellen des Trägers in einer Position außerhalb des Containers, insbesondere unmittelbar vor dem Container,
- Ausfahren einer Katze in eine Position außerhalb des Containers, oberhalb des Trägers,
- Verbinden der Katze mit dem Träger,
- Anheben des Trägers mittels der Katze,
- Verfahren des Trägers mittels der Katze in eine Position innerhalb des Containers,
- Verbinden des Trägers mit einer Tragestruktur.

Eine Ausführungsform des Verfahrens umfasst ferner die folgenden Schritte:
- Erhalten von Informationen sämtlicher mit dem Container zu transportierender Fahrzeuge, wobei die Informationen zumindest Angaben über die Dimensionen der Güter enthalten,
- Erstellen eines Beladeplans, wobei der Beladeplan vorzugsweise eine Zuordnung von Fixierungsmitteln von Trägern zu Fixierungslöchern umfasst.

Dabei handelt es sich bei wenigstens einem Teil der Güter um ein oder mehr Fahrzeuge.

Ein weiterer Aspekt dieser Erfindung betrifft ein System mit einer Vielzahl von Containern, wobei wenigstens ein Teil der Container ein Container der vorbeschriebenen Art ist und dieser Teil der Container bei einer ersten Fahrt zum Transport eines oder mehrerer Fahrzeuge genutzt wird und bei einer weiteren Fahrt zum Transport anderer Güter genutzt wird. Dabei werden die erfindungsgemäßen Container anhand des vorbeschriebenen Verfahrens mit Fahrzeugen beladen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt
- Fig. 1: eine semitransparente Seitenansicht einer beispielhaften Ausbildung des erfindungsgemäßen Containers mit ersten Fahrzeugen;
- Fig. 2: eine semitransparente Seitenansicht der beispielhaften Ausbildung des erfindungsgemäßen Containers mit zweiten Fahrzeugen;
- Fig. 3: eine semitransparente Seitenansicht der beispielhaften Ausbildung des erfindungsgemäßen Containers während eines Beladungsprozesses; und
- Fig. 4: eine Ansicht von schräg oben auf die beispielhafte Ausbildung des erfindungsgemäßen Containers während des Beladungsprozesses.

Der Container 1 liegt in den folgenden Figuren auf einem Autotrailer 7 auf und zeigt jeweils die Aufnahme von Fahrzeugen 3 genau einer jeweiligen Art. Dies ist jedoch nicht als einschränkend zu interpretieren. Mit den Containern 1 ist jegliches containertypische Handling, insbesondere die Beförderung der Container 1 auf See oder auf Schienen möglich. Gleichfalls können die Container 1 Fahrzeuge 3 verschiedener Art und Modelle zugleich aufnehmen. Eine Verteilung der Fahrzeuge 3 im Inneren der Container 1 wird beispielsweise mit einem Algorithmus zur Bestimmung der optimalen Raumausnutzung bestimmt. Eine in den Figuren nicht gezeigte Steuereinheit erzeugt elektrische Signale, um die Katze 6K zu steuern. Weiter weisen sämtliche im Folgenden gezeigte Träger 4 seitlich ausfahrbare Fixierungsmittel 4M zum Einstecken in Fixierungspositionen (Fixierungslöcher 5L) der Tragestrukturen 5 auf, wobei die Fixierungsmittel der Träger aufgrund des Detailgrads der Zeichnungen nicht im Detail dargestellt sind. Die Träger 4 sind weiter in ihrer Länge und Breite auf eine jeweilige Größe der Räder 3R sowie Spurweite und Achsenabstand verschiedener Modelle anpassbar. Sämtliche in den Zeichnungen dargestellte Container 1 sind beispielsweise mit einer Recheneinheit verbindbar, die bei der Ermittlung der optimalen Raumausnutzung mitwirkt. Die Recheneinheit erstellt beispielsweise einen Beladeplan und gibt vor, mit welchen Fixierungspositionen die Fixierungsmittel 4M verbunden werden sollen, wobei die Recheneinheit hierbei die folgenden Merkmale berücksichtigt:
- Fahrzeugmodell, insbesondere Fahrzeuggröße und -dimension,
- Containergröße,
- Größe und Dimension weiterer mit dem Container 1 zu transportierender Güter.

Die in den Zeichnungen offenbarten Container 1 weisen weiter einen durchgängigen Abschnitt mit Fixierungslöchern 5L als Tragestruktur 5 auf. Alternative Tragestrukturen, die gegenüber dieser Ausbildung Gewicht einsparen, können beispielsweise über einzelne Tragestruktur-Abschnitte, die entlang des Containers 1 verschoben werden können, eine Befestigung für die Träger 4 bereitstellen. Die Abschnitte der Tragestruktur 5 sind beispielsweise an der jeweils geforderten Position fixierbar und der Abstand zwischen Abschnitten wird auf den jeweiligen Achsenabstand eines Fahrzeugs 3 und dessen geplante Ausrichtung im Container 1 angepasst. Beispielsweise können die Container 1 Mittel zur Erhöhung der Sicherheit, wie Löschdecken, Kameras, Feuerlöscher und Tracker, aufweisen.

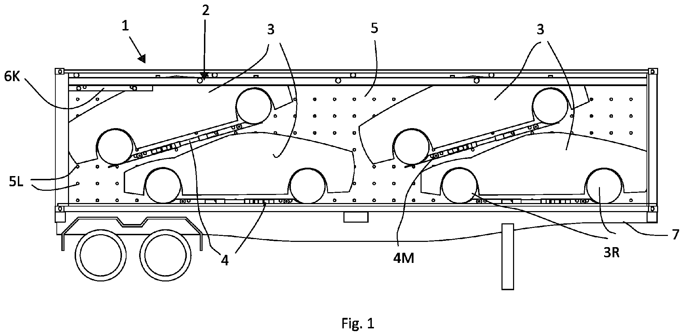

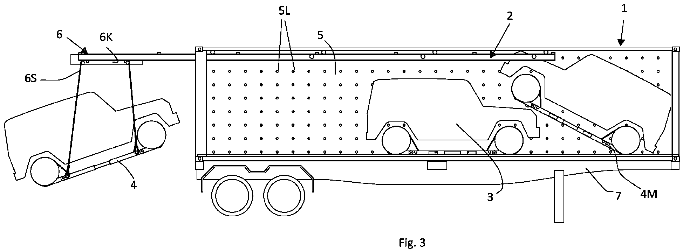

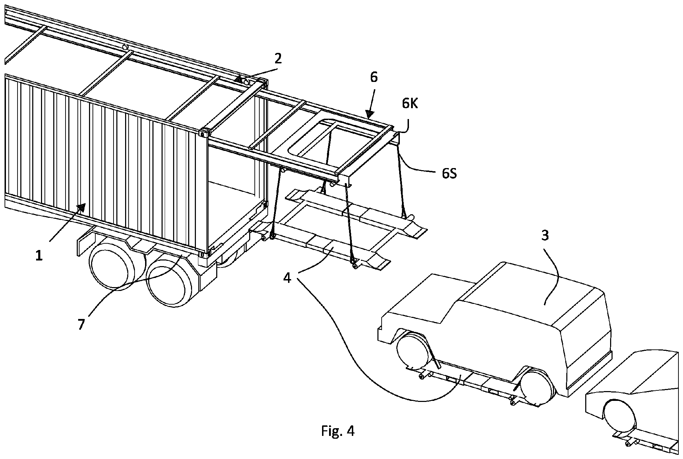

**Figur 1** zeigt eine mögliche Positionierung einer ersten Art von Fahrzeugen 3 in einer beispielhaften Ausbildung des erfindungsgemäßen Containers 1. Der Container 1 weist eine Vorrichtung zur Beladung des Containers 1 auf. Die zugewandte Seite (mit Tragestruktur) des Containers 1 ist ausgeblendet, um einen Blick auf das Innere des Containers 1 zu ermöglichen. An der hinter den Fahrzeugen 3 befindlichen Wand ist ein zusammenhängender Abschnitt einer Tragestruktur 5 gezeigt, der die gesamte Wand abdeckt und eine stabilitätserhöhende Stützfunktion ausübt, indem er zusätzlich als Wandverstärkung wirkt. Der Container 1 weist ferner eine an der Containerdecke befindliche Katze 6K auf, die zwischen einer Position außerhalb des Containers 1 (vgl. Fig. 3 und 4) und innerhalb des Containers 1 verfahrbar ist. Die mittels der Katze 6K hebbaren Träger 4 sind in die Tragestruktur 5 eingesteckt. Dabei wurden die Träger 4 mit den auf ihnen befindlichen Fahrzeugen 3 so versetzt zueinander angeordnet, dass vier Fahrzeuge 3 in einem gemeinsamen Container 1 aufgenommen werden können, indem sie insbesondere abschnittsweise über einem jeweils benachbarten Fahrzeug 3 hängen/stehen.

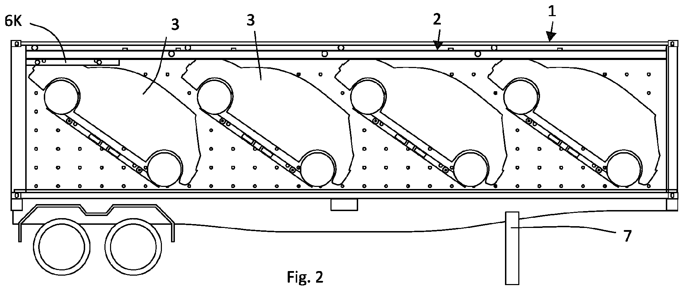

Die gezeigten Träger 4 sind in ihrer Spurweite und Länge verstellbar. So ist in **Figur 2** eine weitere Möglichkeit der Positionierung von Fahrzeugen 3 einer zweiten Art im erfindungsgemäßen Container 1 gezeigt. Diese von den in Figur 1 gezeigten verschiedenen Fahrzeuge 3 wurden hier alle in derselben Ausrichtung angeordnet, sodass eine jeweilige Front eines Fahrzeugs 3 über dem Heck des davor befindlichen Fahrzeugs 3 hängt. Die Tragestruktur 5 weist wie in Figur 1 Fixierungslöcher 5L auf, in die die Träger 4 eingesteckt sind.

Um ein Fahrzeug 3 in den Container 1 zu befördern, wird die Hebevorrichtung 6 beispielsweise teleskopartig aus dem Container 1 ausgefahren, wie in **Figur 3** gezeigt. Die Katze 6K ist über einen Seilzug 6S mit dem Träger 4 verbunden. Auf dem Träger 4 ist ein Fahrzeug 3 dritter Art befestigt. Mittels der Katze 6K wird der Träger 4 angehoben und anschließend in den Container 1 eingefahren, bis das Fahrzeug 3 an der vorgesehenen Position in der vorgesehenen Ausrichtung hängt und die Fixierungsmittel 4M der Träger 4 mit den Fixierungslöchern 5L verbunden werden.

Eine perspektivische Ansicht des Containers 1 ist in **Figur 4** gezeigt. Die ausfahrbare Katze 6K ist hier mit einem leeren Träger 4 verbunden. Auf dem Träger 4 kann jegliche Art von Fahrzeug 3 fixiert werden. Vor dem Container 1 sind weitere aufzunehmende Fahrzeuge 3 aufgereiht. Um den Container 1 zu beladen, werden beispielsweise die folgenden Schritte durchlaufen:
- Befestigen eines Fahrzeugs 3 auf einem Träger 4,
- Bereitstellen des Trägers 4 in einer Position außerhalb des Containers 1, insbesondere unmittelbar vor dem Container 1,
- Ausfahren einer Katze 6K in eine Position außerhalb des Containers 1, oberhalb des Trägers 4,
- Verbinden der Katze 6K mit dem Träger 4,
- Anheben des Trägers 4 mittels der Katze 6K,
- Verfahren des Trägers 4 mittels der Katze 6K in eine Position innerhalb des Containers 1,
- Verbinden des Trägers 4 mit einer Tragestruktur 5.

Beispielsweise umfasst der Beladevorgang weiter folgende Schritte:
- Erhalten von Informationen sämtlicher mit dem Container 1 zu transportierender Güter, wobei die Informationen zumindest Angaben über die Dimensionen der Güter enthalten,
- Erstellen eines Beladeplans, wobei der Beladeplan vorzugsweise eine Zuordnung von Fixierungsmitteln 4M von Trägern 4 zu Fixierungslöchern 5L umfasst.

Gleichfalls kann das Ausladen des Containers 1 über folgende Schritte geschehen:
- Verbinden der Katze 6K mit einem Träger 4 innerhalb des Containers 1,
- Lösen der Fixierungsmittel 4M von den Fixierungspositionen,
- Anheben des Trägers 4,
- Ausfahren der Katze 6K in eine Position außerhalb des Containers 1,
- Absetzen des Trägers 4,
- Lösen der Katze 6K von dem Träger 4.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 1: Container
- 2: Vorrichtung
- 3: Fahrzeug
- 3R: Rad
- 4: Träger
- 5: Tragestruktur
- 5L: Fixierungslöcher
- 6: Hebevorrichtung
- 6K: Katze
- 6S: Seilzug
- 7: Autotrailer

## Patentansprüche

1. Container (1) mit einer Vorrichtung (2) zur Beladung des Containers (1) mit Fahrzeugen (3), wobei die Vorrichtung (2) wenigstens einen Träger (4) und wenigstens zwei einander gegenüberliegende an Containerwänden befindliche Abschnitte einer Tragestruktur (5) aufweist, **dadurch gekennzeichnet, dass** die Vorrichtung (2) eine an einer Containerdecke befindliche Hebevorrichtung (6) mit einer Katze (6K) aufweist, wobei die Katze (6K) zwischen einer Position außerhalb des Containers (1) und einer Position innerhalb des Containers (1) verfahrbar ist und dazu eingerichtet ist, Träger (4) mit darauf befindlichen Fahrzeugen (3) von außerhalb des Containers (1) in den Container (1) zu heben.

2. Container (1) nach Anspruch 1, **dadurch gekennzeichnet, dass** die Vorrichtung (2) weiter eine Steuereinheit aufweist, die elektrische Signale zur Steuerung der Katze (6K) erzeugt.

3. Container (1) nach Anspruch 1 oder 2, **dadurch gekennzeichnet, dass** die Tragestruktur (5) eine Vielzahl von Fixierungspositionen, insbesondere Fixierungslöchern (5L), aufweist und dass die Träger (4) seitlich ausfahrbare Fixierungsmittel (4M) aufweisen.

4. Container (1) nach einem der vorigen Ansprüche, **dadurch gekennzeichnet,**
**dass** eine in die Träger (4) integrierte Sensorik, die vorzugsweise in Kommunikation mit der Steuereinheit steht, bei der Erfassung von Fixierungspositionen, insbesondere Fixierungslöchern (5L), mitwirkt.

5. Container (1) nach einem der vorigen Ansprüche,
**dadurch gekennzeichnet,**
**dass** die Vorrichtung (2) mit einer Recheneinheit verbindbar ist, wobei die Recheneinheit einen Beladeplan für die Fixierungsmittel (4M) der Träger (4), insbesondere optimale Fixierungslöcher (5L), ermitteln kann, wobei die Ermittlung folgende Merkmale berücksichtigt:
- Fahrzeugmodell, insbesondere Fahrzeuggröße und -dimension,
- Containergröße,
- Größe und Dimension weiterer mit dem Container (1) zu transportierender Güter.

6. Container (1) nach einem der vorigen Ansprüche,
**dadurch gekennzeichnet,**
**dass** die Träger (4) in einer Spurweite und/oder einem Achsstand und/oder einer Radgröße verstellbar sind.

7. Container (1) nach einem der vorigen Ansprüche,
**dadurch gekennzeichnet,**
**dass** der Abschnitt der Tragestruktur (5) jeweils die Containerwand in Gänze abdeckt und/oder die Tragestruktur (5) zusätzlich eine die Containerwand unterstützende Funktion erfüllt.

8. Container (1) nach Anspruch 5,
**dadurch gekennzeichnet,**
**dass** die Vorrichtung (2) ein graphisches Nutzerinterface aufweist, mit dem der Beladeplan verändert werden kann und/oder dass mit einem mit der Recheneinheit der Vorrichtung in Verbindung stehenden Handy der Beladeplan verändert werden kann.

9. Container (1) nach einem der vorigen Ansprüche,
**dadurch gekennzeichnet,**
**dass** die Hebevorrichtung (6) teleskopartig aus dem Container (1) ausfahrbar ist.

10. Verfahren zur Beladung eines Containers (1) nach einem der vorigen Ansprüche mit Fahrzeugen (3), **dadurch gekennzeichnet,**
**dass** es die folgenden Schritte umfasst:
- Befestigen eines Fahrzeugs (3) auf einem Träger (4),
- Bereitstellen des Trägers (4) in einer Position außerhalb des Containers (1), insbesondere unmittelbar vor dem Container (1),
- Ausfahren einer Katze (6K) in eine Position außerhalb des Containers (1), oberhalb des Trägers (4),
- Verbinden der Katze (6K) mit dem Träger (4),
- Anheben des Trägers (4) mittels der Katze (6K),
- Verfahren des Trägers (4) mittels der Katze (6K) in eine Position innerhalb des Containers (1),
- Verbinden des Trägers (4) mit einer Tragestruktur (5).

11. Verfahren nach dem vorigen Anspruch,
**dadurch gekennzeichnet,**
**dass** es ferner die folgenden Schritte umfasst:
- Erhalten von Informationen sämtlicher mit dem Container (1) zu transportierender Fahrzeuge, wobei die Informationen zumindest Angaben über die Dimensionen der Güter enthalten,
- Erstellen eines Beladeplans, wobei der Beladeplan vorzugsweise eine Zuordnung von Fixierungsmitteln von Trägern (4) zu Fixierungslöchern (5L) umfasst.

12. System, aufweisend eine Vielzahl von Containern (1), wobei wenigstens ein Teil der Container ein Container (1) nach einem der Ansprüche 1 bis 9 ist und dieser Teil der Container (1) bei einer ersten Fahrt zum Transport eines oder mehrerer Fahrzeuge (3) genutzt wird und bei einer weiteren Fahrt zum Transport anderer Güter genutzt wird.
